# EUROPEAN PATENT SPECIFICATION

(11) **EP 4 086 573 B1**
(45) Date of publication and mention of the grant of the patent: **14.10.2026**
(21) Application number: 21172316.8
(22) Date of filing: 05.05.2021
(51) Int. Cl.: G01C 21/20, G04B 19/26

(54) **TIDAL INFORMATION DISPLAY DEVICE**
GEZEITENINFORMATIONSANZEIGEVORRICHTUNG
DISPOSITIF D'AFFICHAGE D'INFORMATIONS DE MARÉE

(43) Date of publication of application: 09.11.2022
(73) Proprietor: FURUNO ELECTRIC CO., LTD., Nishinomiya-City, Hyogo 662-8580 (JP)
(72) Inventor: OKUDA, Masato, Nishinomiya-City 662-8580 (JP)
(74) Representative: Müller Hoffmann & Partner

(56) References cited:
- WO-A1-2020/061545
- GB-A- 2 474 715
- US-A- 5 347 497
- US-A1- 2014 160 165
- US-B2- 9 401 049
- ANONYMOUS: "Tide times @ Windy Community", 26 May 2019 (2019-05-26), XP055843556, Retrieved from the Internet <URL:https://community.windy.com/topic/8509/tide-times> [retrieved on 20210922]
- ANONYMOUS: "Windy - how to open tide information", 13 March 2018 (2018-03-13), XP055843572, Retrieved from the Internet <URL:https://www.facebook.com/watch/?v=2144979622396826> [retrieved on 20210922]

## Description

### Technical field

The present disclosure mainly relates to a tidal information display device, and more specifically to superimposing tidal information on an image for navigation of a water vessel using augmented reality.

### Background of the Invention

Tides have been known to influence a course of the marine vessel on water. Vessel navigating personnel, for example, a captain, crew, or other navigating personnel on-board the marine vessel may be unaware of when and how each tide may influence the course of the marine vessel. For example, in waters where tides may, or stated differently - are likely to, be encountered by the marine vessel, a position, direction and/or time at which the tides can occur may be unknown by the vessel navigating personnel and consequently, the vessel navigating personnel may be forced to choose or elect a sub-optimal course of travel for the marine vessel in such waters. Depending on a severity of, or by simply encountering, these tides over a prolonged period of time, these tides may contribute in negatively impacting a structural integrity and/or an operational performance of the marine vessel.

Some Augmented Reality (AR) based navigation systems have been developed in the past for assisting in the navigation of marine vessels. These systems have been known to traditionally depict tidal information graphically, that is, by way, or use, of one or more graphs. However, with this approach of displaying tidal information graphically, additional display devices, separate from those used to display maritime charts or geographical maps, may be needed to display these graphs thereby increasing costs while also continuing to remain counter-productive to, and inefficient in, the use of these display devices for the purposes of navigating the ship. In fact, even if these graphs were to be displayed on a predesignated area of the same display device as that used for displaying charts, it is well known that displaying these graphs with sufficient legibility *i.e.,* for facilitating the easy use of such graphs by navigating personnel, may entail that an amount of the area on the display device designated for such display of the graph/s would need to be relatively large enough even with the use of most modern large sized display devices especially for maintaining convenience to the navigating personnel of the ship. Nevertheless, by presenting the tidal information graphically, these graphs can continue to remain less intuitive to the navigating personnel in that the navigating personnel may need to keenly observe and interpret these graphs based on the information in the observed graphs. Such keen observation and interpretation of the graphs by the navigating personnel may be slow, tedious, and cumbersome while also contributing to causes of fatigue besides delaying and/or rendering the navigating personnel with poor and/or ineffective decision making for purposes of subsequent navigation of the ship.

Moreover, when a ship intends to navigate around tidal zones of water bodies, the ship can obtain tidal information from various sources, for example, using on-board sensing equipment or from an external source with use of a communication means such as satellite communication. However, even with the tidal information from these sources, the information from each of these sources is not fully integrated by many of the conventionally designed navigation systems for display in an effective manner and is therefore, rendered sub-optimal for intuitive use by navigating personnel.

Conventional Augmented Reality (AR) based navigation systems can display image information captured by an image sensor (camera) and information about surrounding ships and land acquired based on information captured by a sensor such as a radar, however, it is difficult to display the tidal information by the conventional AR navigation system because the tidal information is not necessarily obtained by the sensor of the own vessel, but also from an external base through the communication equipment. In the current state of the art, there does not exist an AR based display system for navigation that is able to display tidal information, especially when it is provided from a source other than one's own vessel, in a manner that can be intuitively grasped by the navigating personnel for use in navigating the ship. From GB 2474715 A, it is known to for a vessel to calculate a predicted arrival time at points in a monitored zone, the zone being selected based on at least the position of the vessel and to calculate the water depth at points in the monitored zone, by applying tide data to depth data for the respective predicted arrival times. US 5 347 497 A teaches a graphic tide indicator system that includes means for storing the time intervals between a plurality of consecutive high tides, means for determining the temporal position in the current time interval, and a visual display means, which in one embodiment may have a plurality of sequential scenes representing variations of the water level between tidal extremes, for displaying, in response to the temporal position, the relative water depth, or the scene corresponding to the current time. The contribution "Tide times @ Windy Community, 2 May 2019, XP055843556, as retrievable from the Internet on 22 September 2021 under URL:https://community.windy.com/topic/8509/tide-times, discloses a so-called tide forecast layer to be available for certain locations. The contribution "Windy - how to open tide information", 13 March 2018, XP055843572, as retrievable from the Internet on 22 September 2021 under URL:https://www.facebook.com/watch/?2=2144979622396826 teaches to provide information on tides. US 9 401 049 B2 and WO 2020/061545 A1 both relate to augmented reality systems for use on ships.

For the aforementioned reasons, there is a need for providing a system and method that displays tidal information on a display screen for assisting in the navigation of a marine vessel.

### SUMMARY OF THE INVENTION

The above problems are solved by the subject-matter of the independent claims. Further deatails are included in the depednent claims.

### Effect(s) of the invention

The problem of not being able to display tidal information that can be intuitively used by the navigating personnel of the ship is solved by using a tidal information display device that depicts the tidal information pictorially, as opposed to graphically. Also, the tidal information display device eliminates the need for, or use of, separate display devices for displaying different types of information pertaining to tides by integrating the tidal information onto the same display screen. In fact, tidal information display device of the present disclosure can beneficially, or stated differently - advantageously offer to present the tidal information to the navigating personnel for use in a highly intuitive manner as opposed to otherwise requiring keen observation typically encountered with the use of graphs or other similar approaches.

### BRIEF DESCRIPTION OF DRAWINGS

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein:
**FIG.** 1 is a block diagram illustrating an entire configuration of a tidal information display device for a movable body in which an image sensor is attached to the movable body according to one embodiment of the present disclosure;
FIG. 2 illustrates a superimposed camera image of a region including the movable body and showing a GUI superimposed on a pre-determined position of a tide on the image;
FIG. 3 illustrates an enlarged view of the superimposed image showing various information presented by the GUI and another minimized version of the GUI as a mini-gauge; and
FIG. 4 is a flowchart illustrating a method for superimposing tidal information on an image displayed on a display screen, in accordance with an embodiment of the present disclosure.

### DETAILED DESCRIPTION OF THE EMBODIMENTS

Example apparatus are described herein. Other example embodiments or features may further be utilized, and other changes may be made, without departing from scope of the subject matter presented herein. In the following detailed description, reference is made to the accompanying drawings, which form a part thereof.

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

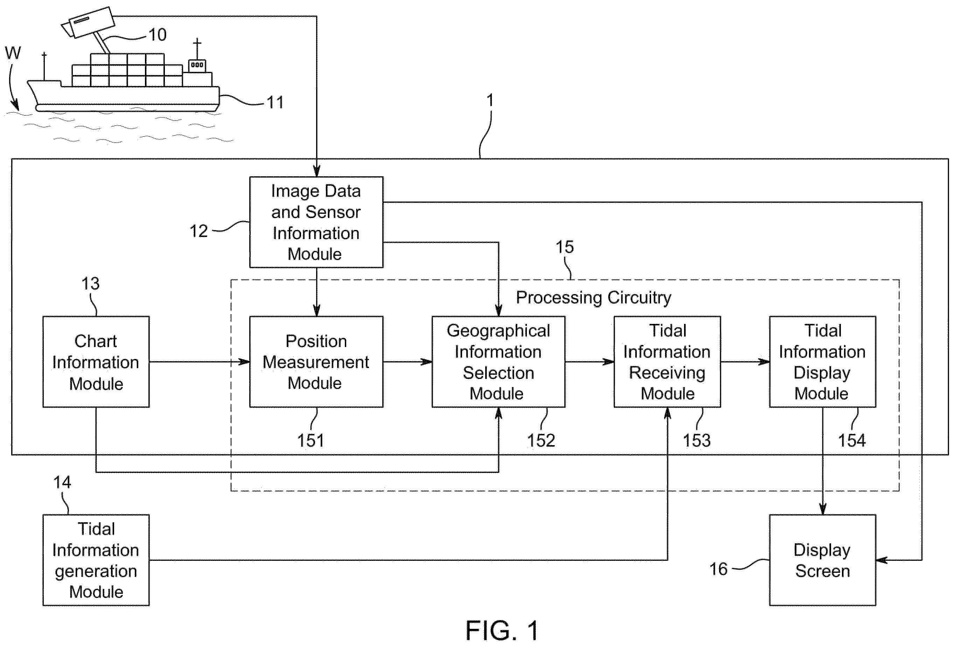

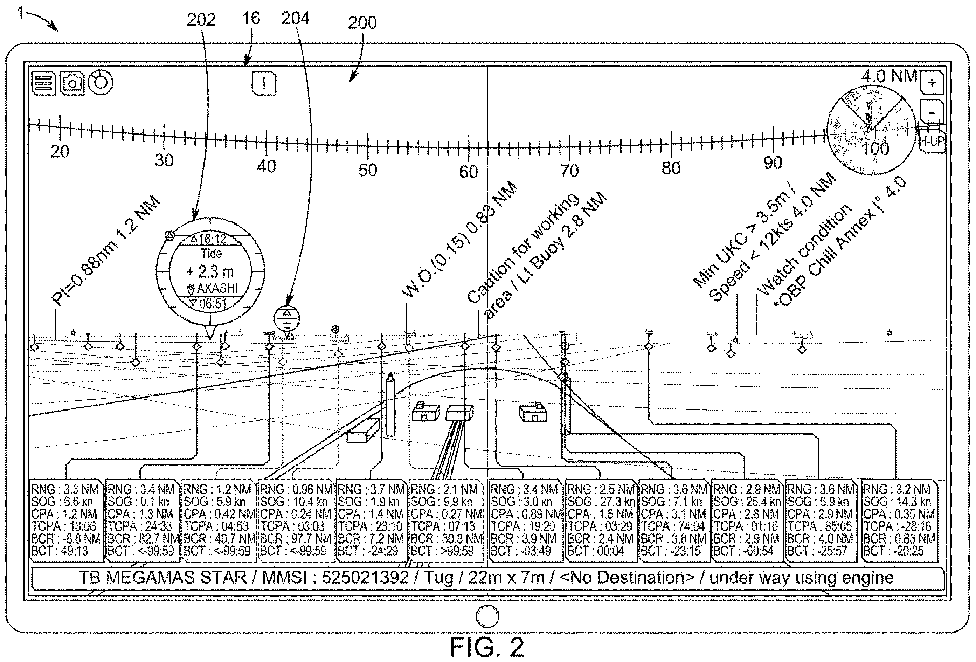

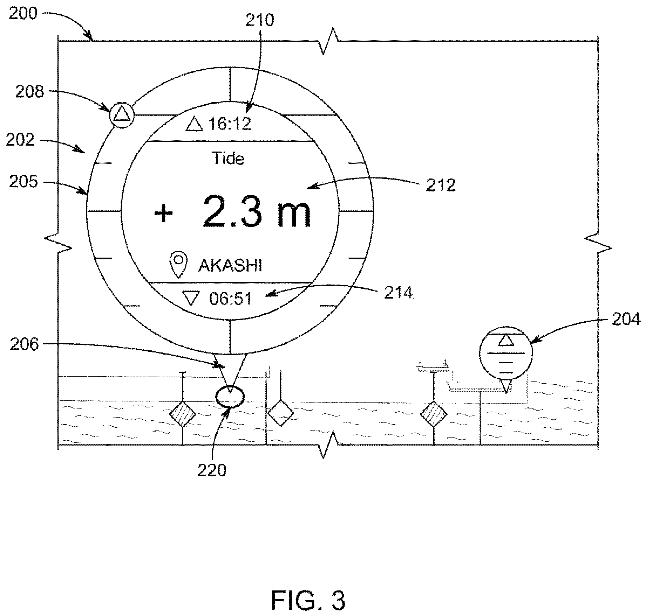

FIG. 1 is a block diagram illustrating an entire configuration of a tidal information display device 1 in which an image sensor 10 is attached to a movable body 11 according to one embodiment of the present disclosure. FIG. 2 illustrates a superimposed camera image 200 of a region including the movable body 11 and showing a GUI 202 superimposed on a pre-determined position of a tide 220 on the image 200. FIG. 3 illustrates an enlarged view of the superimposed image 200 showing various information presented by the GUI 202, another GUI 204 as a mini-gauge that is similar to a minimized version of the GUI 202, and a position of the tide 220.

Next, mainly referring to FIG. 1, the image sensor 10 (hereinafter also referred to as camera 10) may be attached to the movable body 11 (hereinafter also referred to as ship 11).

The tidal information display device 1 may be located on-board the ship 11 and provided with, or in electrical connection to, the camera 10 as the ship instrument for purposes as will be explained in detail later herein.

The camera 10 may be configured as, for example, a limited-viewing angle or a wide-angle video camera which images the water surface W in the vicinity, or around at least a portion of the perimeter of the ship 11. This camera 10 may have a live output function, capable of generating video data (image data) as the imaged result in real time, and outputting it to a display screen 16. As illustrated in FIG. 1, the camera 10 may be installed in the ship 11 so that an imaging direction generally faces onto the water surface W forward of the hull.

The camera 10 may be attached to the ship 11 through a rotating mechanism (not illustrated) and, therefore, the imaging direction can be changed in a given angle range on the basis of the hull of the ship 11, for example, by inputting one or more commands via the tidal information display device 1 for instructing a panning/tilting of the camera 10.

The tidal information display device 1 may be provided with, or be communicatively coupled to, the display screen 16 for generating an image 200 expressing the situation around the movable body 11 using Augmented Reality (AR) based on, among other things, a detected position of the ship 11 as will be explained later herein, and superimposing a GUI 202/204 on the image 200 corresponding to a predetermined position of a tide on the image.

The display screen 16 may be configured as, for example, a display screen that forms part of a navigation assisting device to which a ship operator who operates the ship 11 refers. However, the display screen 16 is not limited to the above configuration, and, for example, it may be a display screen for a portable computer which is carried by a ship operator's assistant who monitors the surrounding situation from the ship 11, a display screen for a passenger to watch in the cabin of the ship 11, or a display part for a head mounted display, such as a wearable glass, worn by a passenger. In an embodiment of the present disclosure, the camera 10, a tidal information generation module 14, and the display screen 16 are external to the display device 1. In another embodiment of the present disclosure, the camera 10, the tidal information generation module 14, and the display screen 16 are an integral part of the display device 1. Alternatively, the camera 10, the tidal information generation module 14, the display screen 16 and the tidal information display device 1 may integrally form an Augmented Reality (AR) based navigation apparatus that autonomously, or at least semi-autonomously facilitates a user to, navigate the ship 11 across the sea. The AR based navigation apparatus enables the user to navigate the ship by superimposing live tidal information on live images of surroundings of the ship in a manner which is easy for a user to comprehend.

The tidal information display device 1 may also be connected to variety of peripheral devices including, but not limited to, a keyboard and a mouse which the user may operate for performing various functions pursuant to functionalities in the present disclosure. For example, the user can provide various kinds of instructions to the tidal information display device 1 and the camera 10 about generation of an image by operating the keyboard and/or the mouse. The instructions may include the pan/tilt operation of the camera 10, setting of displaying or not-displaying of various types of information, and a setup of a viewpoint from which the image is captured.

The tidal information display device 1 may further be connected to a tidal information generation module 14 that is configured to generate tidal information including position of a tide on the water surface (W). The tidal information generation module 14 may include an external communication equipment, for example, a land station, a Global Navigation Satellite System (GNSS) receiver, an Electronic Chart Display and Information System (ECDIS), an Automated Identification System (AIS) receiver, a radar device etc. In addition to the position of the tide, the tidal information further includes a present height of the tide, a high tide time and a low tide time for a given tide. Additionally, or optionally, the tidal information generation module 14 may include one or more sensors attached to the ship 11. These sensors may include GNSS receivers, AIS systems, or other peripheral devices that form part of the on-board ship equipment for detecting tides and/or measuring their pertinent tidal information. The tidal information generating module 14 is configured to generate the tidal information with respect to a reference axis of the map 200, which means that the tidal information generation module 14 is configured to store chart/global co-ordinates of the tides in the region.

Additionally, or optionally, as shown in FIG. 1, the tidal information display device 1 may include an image data and sensor information module 12, and a chart information module 13 for realizing functionalities that are consistent with the present disclosure.

With continued reference to FIG. 1, the tidal information display device 1 includes a processing circuitry 15. The image data and sensor information module 12 may be configured to receive an image captured by the image sensor 10, and output the image data to the display screen 16. Further, the image data and sensor information module 12 may also be configured to receive and store image sensor information including a position and an azimuthal orientation of the image sensor 10 with respect to a reference axis of a global geographical map. The image sensor 10 is installed on the ship 11. While capturing images (and for sake of clarity in this disclosure), a position of the image sensor 10 may be assumed to be deduced from, for example, a position of the ship 11 in the map and the azimuthal orientation of the image sensor 10 may be assumed from, for example, a heading direction of the ship 11 with respect to a meridian plane.

The processing circuitry 15 of the tidal information display device 1 includes a position measurement module 151 that is configured to detect the position of the ship 11. To do so, the position measurement module 151 may receive the positional information of the ship 11 from the chart information receiving module 13. The chart information module 13 may be configured to receive and store the global geographical map, or another specified geographical map, for the region based on electronic nautical chart information that may be known beforehand to the chart information module 13.

The position measurement module 151 is configured to detect the position of the ship 11 via any external equipment, for example, a land station or an on-board sensing system such as, but not limited to, a Global Navigation Satellite System (GNSS) receiver, an Electronic Chart Display and Information System (ECDIS), an Automated Identification System (AIS) receiver, a radar device, a sonar etc.

A geographical information selection module 152 is configured to determine geographic information to be displayed on the display screen 16 based on the position of the ship 11 detected by the position measurement module 151. In one embodiment, the geographic information may include the geographical map of a region including the ship, or a geographical map of a region corresponding to a field of view of the image sensor 10. In another embodiment, the geographic information may include the image captured by the image sensor 10 that is attached to the ship 11.

A tidal information receiving module 153 is configured to receive and store tidal information based on the detected position of the ship 11. The tidal information receiving module 153 may be disposed in communication with the tidal information generation module 14 to receive relevant tidal information based on the position of the ship 11 detected by the position measurement module 151.

Referring to **FIGs. 1****,** 2 and **3****,** a tidal information display module 154 is configured to generate display data for displaying a graphical user interface (GUI) 202 on the display screen 16 at a predetermined position, explanation to which *i.e.,* the predetermined position will be made later herein. The GUI 202 is configured for showing the tidal information including at least one of: a present height of a tide, a high tide time, a low tide time, and the position of the tide.

In one embodiment, as illustrated in FIGs. 2 and 3, the GUI 202 is a pop-up balloon. In this embodiment, the tidal information display module 154 is configured to generate the display data for displaying the pop-up balloon on the display screen 16 when a condition is met. In a further embodiment, the condition is met when a user performs a click operation. The term 'click operation' disclosed herein may be performed by the user using a tactile interface on the display screen 16 of the display device 1, or alternatively, by use of other peripheral devices, for example, an input receiving module (not shown) such as a keyboard or a mouse that may be connected to the display device. The user may request the display device 1 to display the GUI 202 to be displayed on the predetermined position that corresponds to a tide in the image 200 obtained from the image sensor 10.

In another embodiment, the GUI 202 may be configured to appear on the image 200 corresponding to the predetermined position of the tide when the predetermined position of the tide is within a predetermined range, for example, less than 5 nautical miles, from the detected position of the ship 11.

In yet another embodiment, the GUI 202 may be displayed when a number of GUIs on the image falls below a predetermined minimum threshold, for example, less than 3 GUIs corresponding to when three tides may be present in the region and the image 200, captured by the image sensor 10, correspondingly shows the three tides but has tidal information pertaining to one or more of the three tides missing therefrom.

Additionally, the tidal information display module 154 may also be configured to superimpose a minimized version of the GUI (as denoted by reference numeral 204 in the views of FIGs. 2 and 3 respectively) on the image 200 that includes a mini-gauge to indicate a height and direction of the tide. As shown in FIG. 2, a horizontal line in the mini-gauge 204 indicates the height of the tide and a triangle in the mini-gauge 204 also works as the triangle-shaped indicator 208.. Referring mainly to FIG. 1, in embodiments herein and also as best shown in the view of FIG. 2, the tidal information display module 154 is generally configured to superimpose the GUI 202 (and the minimized version of the GUI 204) on the image 200 and display the superimposed image 200 on the display screen 16.

The tidal information display module (154) is configured to maximize or minimize at least one of: the GUI (202) and the mini-gauge (204), when a condition is met, the condition includes at least one of: when a user performs a click operation, when the predetermined position exceeds a predetermined range from the detected position of the movable body (11), and when a number of GUIs on the image exceeds above a predetermined minimum threshold.

Referring to **FIG.** 1 and as shown best in the enlarged view of the image **200 in** **FIG.** 3, the tidal information display module 154 is also configured to generate the display data for displaying a gauge 205 in the GUI 202 for indicating the present height of the tide, the high tide time, the low tide time, and the position of the tide. In fact, as shown, an upper portion 210 of the gauge 205 depicts the time at which the high tide condition would prevail at the predetermined position of the tide. Similarly, the time at which the low tide condition would prevail at the predetermined position of the tide is depicted by a lower portion 214 of the gauge 205. Further, the present height of the tide at the predetermined position may be displayed by, or within, a central region 212 of the gauge 205. The central region 212 of the gauge 205 may be configured to display other types of tidal information such as, but not limited to, global geographical co-ordinates for the predetermined position of the tide, local co-ordinates for the predetermined position of the tide based on the predetermined position of the tide, or simply a name of the predetermined position, if available from the map, for example, a name of a port such as 'Akashi' as shown within the central region 212 of the gauge 205. As such, the gauge also has a pointer 206 that is rendered dynamically by the tidal information display module 154 for pointing in the direction of the tide on the image 200 so that the user, for example, navigating personnel using the display device 1 can quickly and readily know a position of the tide in relation to the ship 11, and the associated concomitant tidal information from a remainder of the gauge 205 *i.e.,* the upper portion 210, the central portion 212, and the lower portion 214 of the gauge 205.

Moreover, with continued reference to FIG. 1 and as shown best in the view of FIG. 3, the tidal information display module 154 is also configured to generate the display data for displaying a triangle-shaped indicator 208 on a periphery of the gauge 205 such that a direction of the triangle-shaped indicator 208 indicates a moving direction of the tide *vis-à-vis* the height of the tide *i.e.,* upwards or downwards based on a difference between the present height of the tide (as shown by the central region 212 of the gauge 205) and a height of the tide that would likely occur with passage of time from a current time to a time when the high tide condition or the low tide condition prevails as shown by the upper and lower portions **210, 214** of the gauge 205 respectively.

For example, FIG. 3 shows the triangle-shaped indicator 208 in upper left quadrant of the gauge 205, indicating that while the current/present height of the tide is 2.3 meters higher than mean sea level, approximately 80% or 90% of the time has lapsed in the ongoing rise in the height of the tide while the tide is continuing to move into the high tide condition that is predicted, and likely, to occur at 1612 hours (or at 4:12 p.m. as per 12-hour time format).

In an embodiment herein, the triangle-shaped indicator 208 is also configured to move along the periphery of the gauge 205 for indicating time left for at least one of: a high tide condition and a low tide condition to occur at the predetermined position of the tide based on the detected position of the ship 11. Accordingly, in the foregoing example, it is likely that the triangular-shaped indicator 208 would move into a 12o'clock position when it is 1612 hours at which time the high tide condition has been predicted, or tidal information with such prediction has been, recorded by the external source such as a land station and, received at the tidal information receiving module 14 unless other factors, for instance, other environmental factors also received at the tidal information receiving module 14 has been updated, or modified vis-à-vis the source, to provide new tidal information that is different from the tidal information received earlier *i.e.,* at a previous time, and such updated tidal information changes, or revises, the timing at which the high tide condition or the low tide condition would prevail at the predetermined position of the tide.

Accordingly, in the foregoing example, if the triangular-shaped indicator 208 has moved past the 12o'clock position on the gauge 205, then the triangular-shaped indicator 208 may proceed towards a 6 o'clock position at a time, for example, 0651 hours (or 6:51 a.m. as per 12-hour time format) to denote that the tide will be receding in height until 6:51 a.m. at which time, the low tide condition would prevail at the predetermined position of the tide.

In an embodiment, the predetermined position displayed on the gauge 205 is a port position. Accordingly, coordinates (global or local), or alternatively, a name of the port, for example, 'Akashi' as shown in the view of FIG. 2 or another port's name may be displayed by the central region 212 of the gauge 205. In another embodiment, the predetermined position may include a pre-set position, for example, a geographical location in the sea. In yet another embodiment, the predetermined position may include one or more way-points (WP) set by a user. For example, these group or set of way-points may be located on a course that the ship 11 is intended to travel on. In yet another embodiment, the pre-determined position may include a predicted position, for example, a vector based pre-calculated position on the image 200 to correspond with a possible tide location and as requested by the user of the display screen 16. The predicted position may be calculated based on a speed and a direction of the ship 11 in consideration with a current velocity of the ship 11 using any known conventional technique.

With implementation of embodiments herein, the tidal information display module 154 outputs the GUIs **202** and **204** to the display screen 16 to superimpose the symbols **202** and **204** on the image 200 captured by the image sensor 10 and display the superimposed image to provide visual information about positions of, and the pertinent tidal information, associated with each of the tides with respect to sea surface and based on the detected position of the ship 11 in a manner that is easy for a user to comprehend.

In the context of the present disclosure, the processing circuitry 15 includes a processor, computer, microcontroller, or other circuitry that controls the operations of various components such as an operation panel, and a memory. The processing circuitry 15 may execute software, firmware, and/or other instructions, for example, that are stored on a volatile or non-volatile memory, or otherwise provided to the processing circuitry 15.

Although the GUIs **202, 204** are shown to correspond with respective ones of two selected tides on the image 200, it would be apparent to one of ordinary skill in the art that based on the geographical information at the geographical information selection module 152 and the tidal information at the tidal information receiving module 153, the tidal information display module 154 may select more than or less than two tides and superimpose the selected more than or less than two tides with appropriate GUIs as opposed to that exemplarily shown in the view of FIGs. 2 and 3 respectively.

A scope of the on-board ship equipment (information source for the position measurement module 151 and/or the geographical information selection module 152) connected to the display device 1 is not limited to any of the configurations that have been disclosed herein, and other types of instruments may be included to form part of the on-board ship equipment without limiting the scope of the present disclosure.

Further, the present disclosure is applicable not only to the ship which travels on the sea, but may also be applicable to arbitrary water-surface movable bodies which can travel, for example, on a lake, or a river.

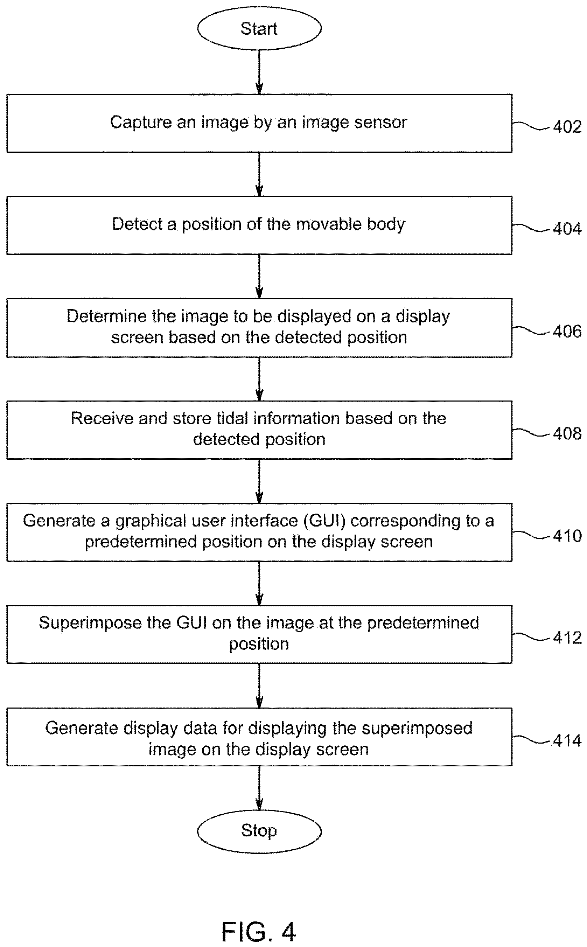

**FIG.** 4 is a flowchart illustrating a method 400 for displaying tidal information for a movable body on an image displayed on a display screen.

At step **402,** the image sensor 10 is configured to capture an image, and output image data.

At step **404,** the position measurement module 151 is configured to detect a position of the movable body.

At step **406,** the geographical information selection module 152 is configured to determine the image to be displayed on the display screen 16 based on the detected position.

At step **408,** the tidal information receiving module 153 is configured to receive and store tidal information based on the detected position.

At step **410,** the tidal information display module 154 is configured to generate a graphical user interface (GUI) corresponding to a predetermined position on the display screen 16, the GUI showing the tidal information including at least one of: a present height of a tide, a high tide time, a low tide time, and a position of the tide.

At step **412,** the tidal information display module 154 is further configured to superimpose the GUI on the image at the predetermined position.

At step **414,** the tidal information display module 154 is configured to generate the display for displaying the superimposed image on the display screen 16.

### DESCRIPTION OF REFERENCE CHARACTERS

- 1: Tidal information display device
- 10: Image sensor (camera)
- 11: Movable body (ship)
- 12: Image data and sensor information module
- 13: Chart information module
- 14: Tidal information generation module
- 15: Processing circuitry
- 151: Position measurement module
- 152: Geographical information selection module
- 153: Tidal information receiving module
- 154: Tidal information display module
- 16: Display screen
- 200: Map
- 202: GUI
- 204: Mini gauge
- 205: Gauge
- 206: Pointer
- 208: Triangle-shaped indicator
- 210: Upper portion of the gauge
- 212: Central Region
- 214: Lower portion of the gauge
- 220: Tide

## Claims

1. A tidal information display device (1) for a movable body (11), comprising:
a position measurement module (151) configured to detect a position of the movable body (11);
a geographical information selection module (152) configured to determine geographic information to be displayed on a display screen (16) based on the detected position;
a tidal information receiving module (152) configured to receive and store tidal information based on the detected position; and
a tidal information display module (154) configured to generate display data for displaying a graphical user interface (GUI) (202) at a predetermined position on an image displayed on the display screen, the GUI (202) configured for showing the tidal information including a present height of a tide, a high tide time, and a low tide time, and showing a position of the tide
the tidal information display module (154) being configured to superimpose a minimized version of the GUI (202) on the image that includes a mini-gauge (204) to indicate a height and direction of the tide, and by the tidal information display module (154) being further configured to generate the display data for displaying a gauge in the GUI (202) for indicating the present height of the tide, the high tide time, the low tide time, and the position of the tide, and
wherein the tidal information display module (154) is configured to generate the display data for displaying a triangle-shaped indicator (208) on a periphery of the gauge (205), wherein a direction of the triangle-shaped indicator (208) indicates the moving direction of the tide *vis-à-vis* the height of the tide in an upwards or downwards moving direction of the tide.

2. The tidal information display device (1) of claim 1, wherein the GUI (202) is a pop-up balloon.

3. The tidal information display device (1) of claim 2, wherein the tidal information display module (154) is configured to generate the display data for displaying the pop-up balloon on the display screen, when a condition is met, the condition includes at least one of: when a user performs a click operation, when the predetermined position is within a predetermined range from the detected position of the movable body (11), and when a number of GUIs on the image falls below a predetermined minimum threshold.

4. The tidal information display device (1) of claim 1, wherein the triangle-shaped indicator (208) is configured to move along the periphery of the gauge (205) for indicating time left for at least one of: a high tide condition and a low tide condition to occur at the predetermined position based on the detected position of the moveable body (11).

5. The tidal information display device (1) of any of claims 1 to 4, wherein the predetermined position is at least one of: a port position, a pre-set position, one or more way-points (WP) set by a user, and predicted position.

6. The tidal information display device (1) of claim 5, wherein the geographic information is one of: a geographical map and an image captured by an image sensor (10) attached to the movable body (11).

7. The tidal information display device (1) of claim 5, wherein the tidal information display module (154) is configured to:
superimpose the GUI (202) on the image at the predetermined position; and
generate the display data for displaying the superimposed image on the display screen (16).

8. The tidal information display device (1) of claim 5, wherein the tidal information receiving module (153) is configured to receive the tidal information from one of: an external communication equipment and one or more sensors attached to the movable body.

9. The tidal information display device (1) of any one of claims 1 to 8, wherein the tidal information display module (154) is configured to maximize or minimize at least one of: the GUI (202) and the mini-gauge (204), when a condition is met, the condition includes at least one of: when a user performs a click operation, when the predetermined position exceeds a predetermined range from the detected position of the movable body (11), and when a number of GUIs on the image exceeds above a predetermined minimum threshold.

10. An augmented reality (AR) based navigation apparatus for a movable body, comprising:
the tidal information display device (1) of any of claims 1 to 9, and
an image sensor (10) attached onto the movable body (11), and configured to capture the image; wherein
the tidal information display module (154) of the tidal information display device (1) is configured to:
superimpose the GUI (202) on the image at the predetermined position; and
generate display data for displaying the superimposed image on the display screen (16).

11. A method for displaying tidal information for a movable body, on an image displayed on a display screen, comprising:
capturing an image by an image sensor attached to a movable body;
detecting a position of the movable body;
determining the image to be displayed on a display screen based on the detected position;
receiving and storing tidal information based on the detected position;
generating a graphical user interface (GUI) corresponding to a predetermined position on the display screen, the GUI showing the tidal information including a present height of a tide, a high tide time, and a low tide time, and showing a position of the tide;
superimposing the GUI on the image at the predetermined position;
and
generating display data for displaying the superimposed image on the display screen,
the superimposing comprising superimposing a minimized version of the GUI (202) on the image that includes a mini-gauge (204) to indicate a height and direction of the tide;
and the generating comprising generating the display data for displaying a gauge in the GUI (202) for indicating the present height of the tide, the high tide time, the low tide time, and the position of the tide, and the display data for displaying a triangle-shaped indicator (208) on a periphery of the gauge (205),
wherein a direction of the triangle-shaped indicator (208) indicates the moving direction of the tide *vis-à-vis* the height of the tide in an upwards or downwards moving direction of the tide.

## Patentansprüche

1. Gezeiteninformationsanzeigevorrichtung (1) für einen beweglichen Körper (11), aufweisend:
ein Positionsmessmodul (151), das konfiguriert ist, eine Position des beweglichen Körpers (11) zu erfassen;
ein Auswahlmodul (152) für geographische Informationen, das konfiguriert ist, geographische Informationen, die auf einem Anzeigebildschirm (16) angezeigt werden sollen, basierend auf der erfassten Position zu bestimmen;
ein Gezeiteninformationsempfangsmodul (153), das konfiguriert ist, Gezeiteninformationen basierend auf der erfassten Position zu empfangen und zu speichern; und
ein Gezeiteninformationsanzeigemodul (154), das konfiguriert ist, Anzeigedaten zum Anzeigen einer grafischen Benutzeroberfläche (graphical user interface - GUI) (202) an einer vorbestimmten Position auf einem auf dem Anzeigebildschirm angezeigten Bild zu erzeugen, wobei die GUI (202) konfiguriert ist, die Gezeiteninformationen einschließlich einer gegenwärtigen Höhe einer Gezeit, einer hohen Gezeitenzeit und einer niedrigen Gezeitenzeit zu zeigen und eine Position der Gezeit zu zeigen,
wobei das Gezeiteninformationsanzeigemodul (154) konfiguriert ist, eine minimierte Version der GUI (202) auf dem Bild, das eine Mini-Anzeige (204) enthält, zu überlagern, um eine Höhe und Richtung der Gezeit anzuzeigen, und dadurch, dass das Gezeiteninformationsanzeigemodul (154) ferner konfiguriert ist, die Anzeigedaten zum Anzeigen eines Pegels in der GUI (202) zum Anzeigen der gegenwärtigen Höhe der Gezeit, der hohen Gezeitenzeit, der niedrigen Gezeitenzeit und der Position der Gezeit zu erzeugen, und
wobei das Gezeiteninformationsanzeigemodul (154) konfiguriert ist, die Anzeigedaten zum Anzeigen eines dreieckförmigen Indikators (208) auf einem Umfang der Anzeige (205) zu erzeugen, wobei eine Richtung des dreieckförmigen Indikators (208) die Bewegungsrichtung der Gezeit im *Verhältni*s zu der Höhe der Gezeit in einer Aufwärts- oder Abwärtsbewegungsrichtung der Gezeit anzeigt.

2. Gezeiteninformationsanzeigevorrichtung (1) nach Anspruch 1, wobei die GUI (202) ein Pop-up-Ballon ist.

3. Gezeiteninformationsanzeigevorrichtung (1) nach Anspruch 2, wobei das Gezeiteninformationsanzeigemodul (154) konfiguriert ist, die Anzeigedaten zum Anzeigen des Pop-up-Ballons auf dem Anzeigebildschirm zu erzeugen, wenn eine Bedingung erfüllt ist, wobei die Bedingung mindestens eines von Folgendem enthält: wenn ein Benutzer einen Klickvorgang durchführt, wenn die vorbestimmte Position innerhalb eines vorbestimmten Bereichs von der erfassten Position des beweglichen Körpers (11) liegt, und wenn eine Anzahl von GUIs auf dem Bild unter einen vorbestimmten Mindestschwellenwert fällt.

4. Gezeiteninformationsanzeigevorrichtung (1) nach Anspruch 1, wobei der dreieckförmige Indikator (208) konfiguriert ist, sich entlang des Umfangs der Anzeige (205) zu bewegen, um die verbleibende Zeit für mindestens eines von Folgendem anzuzeigen: eine Bedingung hoher Gezeit und eine Bedingung niedriger Gezeit, die an der vorbestimmten Position auftreten sollen, basierend auf der erfassten Position des beweglichen Körpers (11).

5. Gezeiteninformationsanzeigevorrichtung (1) nach einem der Ansprüche 1 bis 4, wobei die vorbestimmte Position mindestens eines von Folgendem ist: eine Hafenposition, eine voreingestellte Position, ein oder mehrere Wegpunkte (WP), die von einem Benutzer eingestellt werden, und eine vorhergesagte Position.

6. Gezeiteninformationsanzeigevorrichtung (1) nach Anspruch 5, wobei die geographischen Informationen eines von Folgendem sind: eine geographische Karte und ein Bild, das von einem Bildsensor (10) aufgenommen wird, der an dem beweglichen Körper (11) angebracht ist.

7. Gezeiteninformationsanzeigevorrichtung (1) nach Anspruch 5, wobei das Gezeiteninformationsanzeigemodul (154) konfiguriert ist zum:
Überlagern der GUI (202) auf dem Bild an der vorbestimmten Position; und
Erzeugen der Anzeigedaten zum Anzeigen des überlagerten Bilds auf dem Anzeigebildschirm (16).

8. Gezeiteninformationsanzeigevorrichtung (1) nach Anspruch 5, wobei das Gezeiteninformationsempfangsmodul (153) konfiguriert ist, die Gezeiteninformationen von einem von Folgendem zu empfangen: einer externen Kommunikationsausrüstung und einem oder mehreren Sensoren, die an dem beweglichen Körper angebracht sind.

9. Gezeiteninformationsanzeigevorrichtung (1) nach einem der Ansprüche 1 bis 8, wobei das Gezeiteninformationsanzeigemodul (154) konfiguriert ist, mindestens eines von Folgendem zu maximieren oder zu minimieren: die GUI (202) und die Mini-Anzeige (204), wenn eine Bedingung erfüllt ist, wobei die Bedingung mindestens eines von Folgendem enthält: wenn ein Benutzer einen Klickvorgang durchführt, wenn die vorbestimmte Position einen vorbestimmten Bereich von der erfassten Position des beweglichen Körpers (11) überschreitet, und wenn eine Anzahl von GUIs auf dem Bild einen vorbestimmten Mindestschwellenwert überschreitet.

10. Auf erweiterter Realität (AR) basierende Navigationsvorrichtung für einen beweglichen Körper, aufweisend:
die Gezeiteninformationsanzeigevorrichtung (1) nach einem der Ansprüche 1 bis 9, und
einen Bildsensor (10), der an dem beweglichen Körper (11) angebracht ist und konfiguriert ist, das Bild aufzunehmen;
wobei
das Gezeiteninformationsanzeigemodul (154) der Gezeiteninformationsanzeigevorrichtung (1) konfiguriert ist zum:
Überlagern der GUI (202) auf dem Bild an der vorbestimmten Position; und
Erzeugen von Anzeigedaten zum Anzeigen des überlagerten Bilds auf dem Anzeigebildschirm (16).

11. Verfahren zum Anzeigen von Gezeiteninformationen für einen beweglichen Körper auf einem Bild, das auf einem Anzeigebildschirm angezeigt wird, aufweisend:
Aufnehmen eines Bilds durch einen Bildsensor, der an einem beweglichen Körper angebracht ist;
Erfassen einer Position des beweglichen Körpers;
Bestimmen des Bilds, das auf einem Anzeigebildschirm angezeigt werden soll, basierend auf der erfassten Position;
Empfangen und Speichern von Gezeiteninformationen basierend auf der erfassten Position;
Erzeugen einer grafischen Benutzeroberfläche (GUI), die einer vorbestimmten Position auf dem Anzeigebildschirm entspricht, wobei die GUI die Gezeiteninformationen einschließlich einer gegenwärtigen Höhe einer Gezeit, einer hohen Gezeitenzeit und einer niedrigen Gezeitenzeit zeigt und eine Position der Gezeit zeigt;
Überlagern der GUI auf dem Bild an der vorbestimmten Position;
und
Erzeugen von Anzeigedaten zum Anzeigen des überlagerten Bilds auf dem Anzeigebildschirm,
wobei das Überlagern das Überlagern einer minimierten Version der GUI (202) auf dem Bild, das eine Mini-Anzeige (204) enthält, aufweist, um eine Höhe und Richtung der Gezeit anzuzeigen;
und wobei das Erzeugen das Erzeugen der Anzeigedaten zum Anzeigen eines Pegels in der GUI (202) zum Anzeigen der gegenwärtigen Höhe der Gezeit, der hohen Gezeitenzeit, der niedrigen Gezeitenzeit und der Position der Gezeit und der Anzeigedaten zum Anzeigen eines dreieckförmigen Indikators (208) auf einem Umfang der Anzeige (205) aufweist,
wobei eine Richtung des dreieckförmigen Indikators (208) die Bewegungsrichtung der Gezeit im *Verhältnis* zu der Höhe der Gezeit in einer Aufwärts- oder Abwärtsbewegungsrichtung der Gezeit anzeigt.

## Revendications

1. Dispositif d'affichage d'informations de marée (1) pour un corps mobile (11), comprenant :
un module de mesure de position (151) configuré pour détecter une position du corps mobile (11) ;
un module de sélection d'informations géographiques (152) configuré pour déterminer des informations géographiques à afficher sur un écran d'affichage (16) sur la base de la position détectée ;
un module de réception d'informations de marée (153) configuré pour recevoir et stocker des informations de marée sur la base de la position détectée ; et
un module d'affichage d'informations de marée (154) configuré pour générer des données d'affichage pour afficher une interface utilisateur graphique (GUI) (202) à une position prédéterminée sur une image affichée sur l'écran d'affichage, la GUI (202) étant configurée pour présenter les informations de marée comportant une hauteur actuelle d'une marée, une heure de marée haute et une heure de marée basse, et présenter une position de la marée
le module d'affichage d'informations de marée (154) étant configuré pour superposer une version minimisée de la GUI (202) sur l'image qui comporte une mini-jauge (204) pour indiquer une hauteur et une direction de la marée, et le module d'affichage d'informations de marée (154) étant en outre configuré pour générer les données d'affichage pour afficher une jauge dans la GUI (202) pour indiquer la hauteur actuelle de la marée, l'heure de marée haute, l'heure de marée basse et la position de la marée, et
dans lequel le module d'affichage d'informations de marée (154) est configuré pour générer les données d'affichage pour afficher un indicateur en forme de triangle (208) sur une périphérie de la jauge (205), dans lequel une direction de l'indicateur en forme de triangle (208) indique la direction de déplacement de la marée vis-à-vis de la hauteur de la marée dans une direction de déplacement vers le haut ou vers le bas de la marée.

2. Dispositif d'affichage d'informations de marée (1) selon la revendication 1, dans lequel la GUI (202) est une infobulle.

3. Dispositif d'affichage d'informations de marée (1) selon la revendication 2, dans lequel le module d'affichage d'informations de marée (154) est configuré pour générer les données d'affichage pour afficher l'infobulle sur l'écran d'affichage, lorsqu'une condition est remplie, la condition comporte au moins l'une parmi : lorsqu'un utilisateur réalise une opération de clic, lorsque la position prédéterminée est dans une plage prédéterminée par rapport à la position détectée du corps mobile (11), et lorsqu'un nombre de GUI sur l'image passe en dessous d'un seuil minimal prédéterminé.

4. Dispositif d'affichage d'informations de marée (1) selon la revendication 1, dans lequel l'indicateur en forme de triangle (208) est configuré pour se déplacer le long de la périphérie de la jauge (205) pour indiquer le temps restant pour qu'au moins l'une parmi : une condition de marée haute et une condition de marée basse se produise à la position prédéterminée sur la base de la position détectée du corps mobile (11).

5. Dispositif d'affichage d'informations de marée (1) selon l'une des revendications 1 à 4, dans lequel la position prédéterminée est au moins l'un parmi : une position de port, une position prédéfinie, un ou plusieurs points de cheminement (WP) définis par un utilisateur, et une position prédite.

6. Dispositif d'affichage d'informations de marée (1) selon la revendication 5, dans lequel les informations géographiques sont l'une parmi : une carte géographique et une image capturée par un capteur d'image (10) fixé au corps mobile (11).

7. Dispositif d'affichage d'informations de marée (1) selon la revendication 5, dans lequel le module d'affichage d'informations de marée (154) est en outre configuré pour :
superposer la GUI (202) sur l'image à la position prédéterminée ; et
générer les données d'affichage pour afficher l'image superposée sur l'écran d'affichage (16).

8. Dispositif d'affichage d'informations de marée (1) selon la revendication 5, dans lequel le module de réception d'informations de marée (153) est configuré pour recevoir les informations de marée en provenance de l'un parmi : un équipement de communication externe et un ou plusieurs capteurs fixés au corps mobile.

9. Dispositif d'affichage d'informations de marée (1) selon l'une des revendications 1 à 8, dans lequel le module d'affichage d'informations de marée (154) est configuré pour maximiser ou minimiser au moins l'une parmi : la GUI (202) et la mini-jauge (204), lorsqu'une condition est remplie, la condition comporte au moins l'une parmi : lorsqu'un utilisateur réalise une opération de clic, lorsque la position prédéterminée dépasse une plage prédéterminée par rapport à la position détectée du corps mobile (11), et lorsqu'un nombre de GUI sur l'image dépasse un seuil minimal prédéterminé.

10. Appareil de navigation basé sur la réalité augmentée (AR) pour un corps mobile, comprenant :
le dispositif d'affichage d'informations de marée (1) selon l'une des revendications 1 à 9, et un capteur d'image (10) fixé sur le corps mobile (11), et configuré pour capturer l'image ;
dans lequel
le module d'affichage d'informations de marée (154) du dispositif d'affichage d'informations de marée (1) est configuré pour :
superposer la GUI (202) sur l'image à la position prédéterminée ; et
générer des données d'affichage pour afficher l'image superposée sur l'écran d'affichage (16).

11. Procédé d'affichage d'informations de marée pour un corps mobile, sur une image affichée sur un écran d'affichage, comprenant :
la capture d'une image par un capteur d'image fixé à un corps mobile ;
la détection d'une position du corps mobile ;
la détermination de l'image à afficher sur un écran d'affichage sur la base de la position détectée ;
la réception et le stockage d'informations de marée sur la base de la position détectée ;
la génération d'une interface utilisateur graphique (GUI) correspondant à une position prédéterminée sur l'écran d'affichage, la GUI présentant les informations de marée comportant une hauteur actuelle d'une marée, une heure de marée haute et une heure de marée basse, et présentant une position de la marée ;
la superposition de la GUI sur l'image à la position prédéterminée ;
et
la génération de données d'affichage pour afficher l'image superposée sur l'écran d'affichage,
la superposition comprenant la superposition d'une version minimisée de la GUI (202) sur l'image qui comporte une mini-jauge (204) pour indiquer une hauteur et une direction de la marée ;
et la génération comprenant la génération des données d'affichage pour afficher une jauge dans la GUI (202) pour indiquer la hauteur actuelle de la marée, l'heure de marée haute, l'heure de marée basse et la position de la marée, et des données d'affichage pour afficher un indicateur en forme de triangle (208) sur une périphérie de la jauge (205),
dans lequel une direction de l'indicateur en forme de triangle (208) indique la direction de déplacement de la marée vis-à-vis de la hauteur de la marée dans une direction de déplacement vers le haut ou vers le bas de la marée.
